# EUROPÄISCHE PATENTANMELDUNG

(11) **EP 1 814 002 A1**
(43) Veröffentlichungstag der Anmeldung: **01.08.2007**
(21) Anmeldenummer: 07000236.5
(22) Anmeldetag: 08.01.2007
(51) Int. Cl.: G05B 19/406, G05B 19/418, G05B 23/02, G06F 11/30

(54) **Datenerfassung in einem verteilten Automatisierungssystem**

(30) Priorität: 31.01.2006 DE 102006004633
(71) Anmelder: Phoenix Contact GmbH & Co. KG, 32825 Blomberg (DE)
(72) Erfinder: Deuter, Andreas, Dipl.-Ing., 32657 Lemgo (DE); Wegener, Friedrich, Dipl.-Ing., 37647 Vahlbruch (DE)
(74) Vertreter: Gesthuysen, von Rohr & Eggert

(57) **Zusammenfassung**

Dargestellt und beschrieben ist ein verteiltes Automatisierungssystem mit wenigstens einem Feldgerät (1,1',1") und wenigstens einem auf dem Feldgerät (1,1',1") verfügbaren Datum, wenigstens einem Datenbanksystem (2) und wenigstens einem Netzwerk (3), welches das Feldgerät direkt mit dem Datenbanksystem verbindet.

Mit dem erfindungsgemäßen verteilten Automatisierungssystem werden die Datenerfassungs- und Diagnosemöglichkeiten verbessert, indem das Feldgerät (1,1',1") und das Datenbanksystem (2) über das Netzwerk (3) unmittelbar miteinander verbunden sind, und das Datum von dem Feldgerät (1,1',1") aktiv und direkt über das Netzwerk (3) an das Datenbanksystem (2) übermittelbar ist.

## Beschreibung

Die Erfindung betrifft ein verteiltes Automatisierungssystem mit wenigstens einem Netzgerät erster Ordnung und wenigstens einem auf dem Netzgerät erster Ordnung verfügbaren Datum, wenigstens einem Datenbanksystem und wenigstens einem Netzwerk erster Ordnung. Ferner betrifft die Erfindung ein Verfahren zur Datenerfassung in einem verteilten Automatisierungssystem mit wenigstens einem Netzgerät, wenigstens einem auf dem Netzgerät verfügbaren Datum, wenigstens einem Datenbanksystem zur Verwaltung der von dem Netzgerät stammenden Daten und wenigstens einem Netzwerk.

Verteilte Automatisierungssysteme finden sich in allen technisch-naturwissenschaftlichen Bereichen, in denen Prozesse durch Meß-, Steuer- und Regelungstechnik zumindest teilweise automatisiert werden. Ein verteiltes Automatisierungssystem liegt dann vor, wenn verschiedene Zustandsgrößen des Prozesses meßtechnisch erfaßt werden müssen bzw. auf verschiedene Zustandsgrößen des Prozesses aktiv eingewirkt werden soll. Unabhängig von der räumlichen Ausdehnung eines solchen Prozesses ist es bei einem verteilten Automatisierungssystem notwendig, die Signale mehrerer voneinander unabhängiger Sensoren dezentral zu erfassen, sie zusammenzuführen und zentral zur Ermittlung des Prozeßzustandes zu bewerten, beispielsweise um daraus wiederum Stellgrößen abzuleiten, die ihrerseits verteilten Aktoren vorgegeben werden, die letztlich auf den Prozeß einwirken.

Üblicherweise werden verteilte Automatisierungssysteme funktionell in verschiedene Ebenen gegliedert. Auf der niedrigsten Ebene, der Eingabe-/Ausgabe-Ebene (E/A-Ebene) stehen Netzgeräte zum einen in direktem Kontakt mit dem Prozeß und geben zum anderen Meßdaten an die nächst höhere Ebene, die Steuerungsebene weiter bzw. empfangen aus der Steuerungsebene Steuerungssignale.

Neben reinen Meßdaten werden von den Netzgeräten häufig auch Status- bzw. Diagnosedaten an die Steuerungsebene weitergeleitet und dort beispielsweise von einer Steuerungseinheit aufgenommen. Zur Anzeige von Meßdaten sowie zur Auswertung von Diagnosedaten ist in der Steuerungsebene üblicherweise ein lokaler Evaluierungs- und Vermittlungsrechner vorgesehen, der die entsprechenden Daten von einer oder mehreren Steuerungseinheiten zyklisch abruft (Polling) und die gewünschten Prozeßgrößen darstellt bzw. den Zustand des Prozesses und der Netzgeräte anhand der Status- und Diagnosedaten ermittelt (Phoenix Contact, Produktkatalog "AUTOMATIONWORX 2005", Seiten 14 und 15).

Die Erfassung von Daten aus der E/A-Ebene durch Polling ist häufig technologisch erzwungen und folgt beispielsweise aus der Client-Server-Architektur üblicher Geräteschnittstellen, wozu exemplarisch auf die verbreitete OPC-Schnittstelle (www.opcfoundation. com) verwiesen wird. Nach Erfassung der Daten durch den lokalen Evaluierungs- und Vermittlungsrechner ist es möglich, die Daten von diesem Rechner in ein Datenbanksystem einzuspeisen; der Rechner vermittelt also zwischen den Datenquellen und -senken des verteilten Automatisierungssystems und dem Datenbanksystem.

In der Praxis kommt der organisierten Ablage von Diagnosedaten in dem Datenbanksystem eine erhebliche Bedeutung zu, da die rückschauende und intervallweise Auswertung der Daten von großem Interesse ist, sei es zur Langzeitbeobachtung des verteilten Automatisierungssystems, zur Fehleranalyse oder zur Verwendung der Daten im übergeordneten betrieblichen Planungswerkzeugen ("Manufacturing Execution System", "Enterprise Resource Planning" und "Customer Relationship Management").

In den verschiedenen Ebenen eines verteilten Automatisierungssystems kommen regelmäßig ganz unterschiedliche Technologien zur Realisierung der notwendigen Vernetzungen zum Einsatz. Im Bereich der E/A-Ebene spielen Feldbussysteme eine tragende Rolle (z. B. Interbus, CAN, Profibus), wohingegen in den übergeordneten Ebenen - also im Bereich der Steuerungs- und Leitebene - Netzwerk-Technologien Anwendung finden, wie sie aus dem standardisierten LAN-Bereich (Lokal Area Network) bekannt sind, wie z. B. Ethernet (Phoenix Contact, Produktkatalog "AUTOMATIONWORX 2005", Seiten 14 und 15).

Der Erfindung liegt die Aufgabe zugrunde, ein verteiltes Automatisierungssystem mit verbesserten Datenerfassungs- und Diagnosemöglichkeiten zur Verfügung zu stellen.

Das erfindungsgemäße verteilte Automatisierungssystem, bei dem diese Aufgabe gelöst ist, ist dadurch gekennzeichnet, daß das Netzgerät erster Ordnung und das Datenbanksystem über das Netzwerk erster Ordnung unmittelbar miteinander verbunden sind, und das Datum vom Netzgerät erster Ordnung direkt über das Netzwerk erster Ordnung an das Datenbanksystem übermittelbar ist. Im Rahmen der vorliegenden Erfindung wird unter einem Netzgerät erster Ordnung jedes Gerät im Automatisierungssystem verstanden, das direkt über ein Netzwerk bzw. einen beliebigen Datenkanal mit dem Datenbanksystem des Automatisierungssystems verbunden ist; das diese Verbindung herstellende Netzwerk ist definitionsgemäß ein Netzwerk erster Ordnung.

Das erfindungsgemäße verteilte Automatisierungssystem ist in mehrfacher Hinsicht vorteilhaft. Dadurch, daß die Netzgeräte erster Ordnung direkt über das Netzwerk erster Ordnung Daten an das Datenbanksystem übermitteln können, ist der bislang dazu notwendige lokale Evaluierungs- und Vermittlungsrechner entbehrlich, der bei den aus dem Stand der Technik bekannten verteilten Automatisierungssystemen dem Netzgerät erster Ordnung und dem Datenbanksystem zwischengeschaltet ist. Auch ohne den lokalen Evaluierungs- und Vermittlungsrechner ist dabei eine einwandfreie Datenerfassung möglich. Dies ist insbesondere bei solchen Automatisierungssystemen von Vorteil, bei denen eine Online-Datenevaluierung nicht notwendig ist, oder eine rückblickende Auswertung vergangener Daten in größeren zeitlichen Abständen zur sicheren Beurteilung des Automatisierungssystem-Zustandes ausreichend ist.

Mit einer aktiven Übermittlung eines Datums von dem Netzgerät erster Ordnung an das Datenbanksystem ist gemeint, daß das Netzgerät erster Ordnung keine externe Aufforderung zur Übermittlung von Daten benötigt, sondern vielmehr aktuelle, noch nicht mitgeteilte Daten - sofern diese vorhanden sind - selbständig an das Datenbanksystem übermittelt. Durch diese Maßnahme wird der Auslastungsgrad des Netzwerks erster Ordnung in erheblichem Maße reduziert, da die periodische, unabhängig vom tatsächlichen Vorliegen neuer Daten durchgeführte Abfrage von Daten durch den lokalen Evaluierungs- und Vermittlungsrechner bei den Netzgeräten erster Ordnung entfällt.

Die aktive und direkte Übermittlung von Daten der Netzgeräte erster Ordnung über das Netzwerk erster Ordnung in das Datenbanksystem impliziert, daß einerseits die Netzgeräte erster Ordnung mit entsprechenden Schnittstellen auszustatten sind und daß andererseits das Datenbanksystem, bestehend aus dem eigentlichen Datenspeicher - der Datenbank - und der Verwaltungssoftware - dem Datenbankmanagementsystem - gerätetechnisch eine korrespondierende Kommunikationsschnittstelle aufweisen muß, und das Datenbankmanagementsystem und das Netzgerät erster Ordnung nach einem übereinstimmenden Protokoll Daten austauschen.

Das erfindungsgemäße verteilte Automatisierungssystem läßt sich hinsichtlich seiner Verwendbarkeit noch weiter verbessern, wenn das Netzwerk erster Ordnung so ausgestaltet ist, daß mit ihm eine serielle Datenübertragung realisiert werden kann. In einer bevorzugten Ausführungsform der Erfindung ist das Netzwerk erster Ordnung in Konformität mit einem verbreiteten Standard für lokale Netze (LANs) ausgestaltet, gegenwärtig also bevorzugt in Übereinstimmung mit einem Ethernet-Standard. In einer weiteren Ausgestaltung des erfindungsgemäßen verteilten Automatisierungssystems basiert die Kommunikation zwischen dem Netzgerät erster Ordnung und dem Datenbanksystem über das Netzwerk erster Ordnung auf einem üblichen Netzwerkprotokoll, also beispielsweise auf dem TCP/IP-Protokoll (Transmission Control Protocol / Internet Protokoll). Durch die Verwendung eines derartig ausgestalteten Netzwerks für die Datenübermittlung zwischen Netzgeräten erster Ordnung und dem Datenbanksystem läßt sich das erfindungsgemäße verteilte Automatisierungssystem besonders einfach in übergeordnete Kommunikationsnetzwerke integrieren, da diese üblicherweise auf kompatiblen Technologien (Ethernet) beruhen.

In einer weiteren Ausgestaltung des erfindungsgemäßen verteilten Automatisierungssystems ist wenigstens ein Netzgerät erster Ordnung über wenigstens ein Netzwerk niedrigerer Ordnung mit wenigstens einem Netzgerät niedrigerer Ordnung verbunden. Das bedeutet, daß ein Netzgerät erster Ordnung nicht nur in direkter Verbindung mit dem Datenbanksystem steht, sondern zusätzlich auch mit weiteren Netzgeräten, nämlich Netzgeräten niedrigerer Ordnung verbunden sein kann. Diesem Prinzip folgend, können selbstverständlich auch Netzgeräte niederer - also beispielsweise zweiter - Ordnung mit weiteren unterlagerten Netzgeräten noch niedrigerer - also beispielsweise dritter - Ordnung usw. verbunden sein.

Ein typischer Anwendungsfall einer solch verzweigten und unterlagerten Netzgeräte-Struktur liegt beispielsweise bei auf dem Master-Slave-Prinzip beruhenden Feldbussen vor, bei denen ein oder mehrere Slave-Netzgeräte über den Feldbus mit einem Master-Netzgerät verbunden sind, das entweder erfindungsgemäß direkt über das erste Netzwerk mit dem Datenbanksystem in Verbindung steht oder aber über ein Netzwerk niederer Ordnung mit einem Netzgerät erster Ordnung verbunden ist

Nach einer bevorzugten Ausgestaltung der Erfindung ist das Datenbanksystem über das Netzwerk erster Ordnung und/oder einen separaten Datenkanal mit einem Rechner verbunden, wobei die in dem Datenbanksystem gespeicherten Daten von dem Datenbanksystem auf den Rechner übermittelbar oder durch den Rechner von dem Datenbanksystem abrufbar sind. Der Rechner ist dabei insbesondere zur Datenevaluierung, Datenvisualisierung und zur Diagnose des Automatisierungssystems einsetzbar.

In dem Maße, in dem der separate Datenkanal zur Datenübertragung zwischen dem Datenbanksystem und dem Rechner genutzt wird, wird das Netzwerk erster Ordnung von dieser Überträgungslast befreit Selbst wenn der Rechner bei dem Datenbanksystem durch periodisches Polling neue Daten abfragt, wird dadurch der Datentransfer von den Netzgeräten erster Ordnung zu dem Datenbanksystem nicht beeinträchtigt

Nach einer weiteren eigenständigen Lehre der Erfindung ist die der Erfindung zugrundeliegende Aufgabe durch ein Verfahren zur Datenerfassung in einem verteilten Automatisierungssystem gelöst, bei dem das Netzgerät und die Datenbank des Automatisierungssystems über das Netzwerk unmittelbar miteinander verbunden werden und das Netzgerät die Daten aktiv über das Netzwerk an das Datenbanksystem übermittelt.

Im einzelnen gibt es nun eine Vielzahl von Möglichkeiten, das erfindungsgemäße verteilte Automatisierungssystem bzw. das erfindungsgemäße Verfahren zur Datenerfassung auszugestalten und weiterzubilden. Dazu wird verwiesen einerseits auf die den Patentansprüchen 1 und 10 nachgeordneten Patentansprüche, andererseits auf die folgende Beschreibung mehrerer Ausführungsbeispiele in Verbindung mit der Zeichnung, in der Zeichnung zeigt:
- Fig. 1: ein Blockschaltbild eines aus dem Stand der Technik bekannten verteilten Automatisierungssystems,
- Fig. 2: ein Blockschaltbild eines bevorzugten Ausführungsbeispiels des erfindungsgemäßen verteilten Automatisierungssystems und
- Fig. 3: ein weiteres Ausführungsbeispiel des erfindungsgemäßen verteilten Automatisierungssystems.

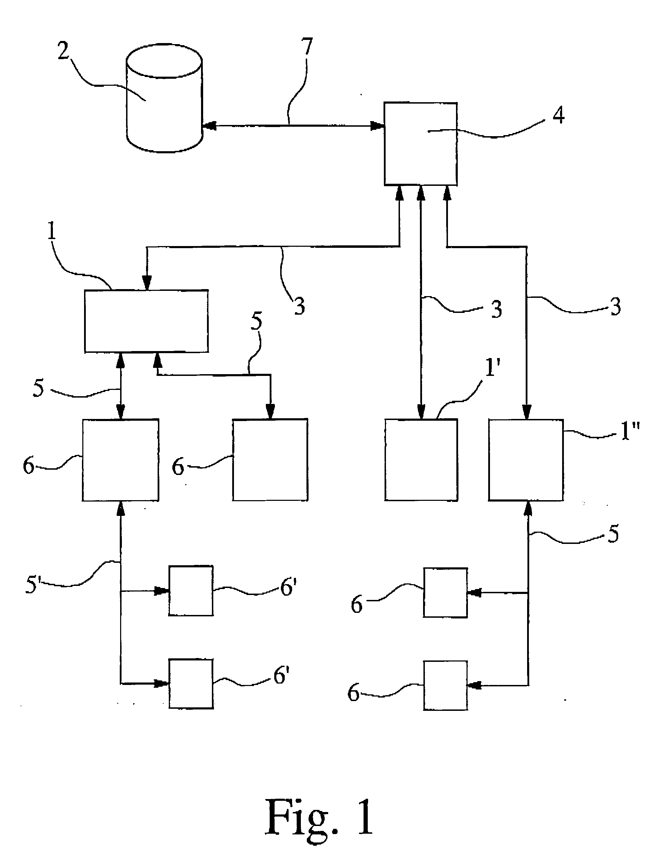

In Fig. 1 ist schematisch ein aus dem Stand der Technik bekanntes verteiltes Automatisierungssystem dargestellt mit Netzgeräten erster Ordnung 1, 1', 1", einem Datenbanksystem 2 und einem Netzwerk erster Ordnung 3, das eine Verbindung herstellt zwischen den Netzgeräten erster Ordnung 1, 1', 1" und einem lokalen Evaluierungs- und Vermittlungsrechner 4.

Die Netzgeräte erster Ordnung 1, 1', 1" können Geräte ganz unterschiedlicher Art sein. In dem in Fig. 1 dargestellten Ausführungsbeispiel handelt es sich bei dem Netzgerät erster Ordnung 1 um eine Steuerung, bei dem Netzgerät erster Ordnung 1' um ein Feldgerät, das über seine Eingabe-/Ausgabe-Schnittstellen, die im einzelnen nicht dargestellt sind, mit dem zu automatisierenden Prozeß in direkter Verbindung steht, und bei dem Netzgerät erster Ordnung 1" handelt es sich um einen Feldbus-Master, der über ein Netzwerk niederer Ordnung 5 mit Netzgeräten niederer Ordnung 6 - im vorliegenden Fall mit Feldgeräten - verbunden ist.

In gleicher Weise ist das Netzgerät erster Ordnung 1 über ein Netzwerk niederer Ordnung 5 mit Netzgeräten niederer Ordnung 6 verbunden. Bei dem einen der mit der Steuerung 1 verbundenen Netzgeräte niederer Ordnung 6 handelt es sich um einen Feldbus-Master, der über ein Netzwerk noch niedriger Ordnung 5' mit noch weiter unterlagerten Netzgeräten 6' verbunden ist.

Bei dem in Fig. 1 dargestellten verteilten Automatisierungssystem stehen die Endgeräte niederer Ordnung 6, 6' in direkter Verbindung mit dem automatisierten Prozeß, und sie reichen typischerweise sowohl Meßdaten als auch sie selbst betreffende Status- und Diagnosedaten an die Netzgeräte höherer Ordnung weiter, bis diese Daten die Netzgeräte erster Ordnung 1, 1', 1" erreicht haben.

Bei dem aus dem Stand der Technik bekannten verteilten Automatisierungssystemen werden die in den Netzgeräten erster Ordnung 1, 1', 1" vorgehaltenen Daten von dem lokalen Evaluierungs- und Vermittltingsrechner 4 abgerufen, ausgewertet und über einen weiteren, separaten Datenkanal 7 zu dem Datenbanksystem 2 übermittelt. Die letztlich von den Netzgeräten erster Ordnung 1, 1', 1" stammenden Daten müssen folglich immer erst von dem lokalen Evaluierungs- und Vermittlungsrechner 4 gesammelt und aufbereitet werden, bevor sie auf dem Datenbanksystem 2 abgelegt werden können.

In Fig. 1 ist das Netzwerk erster Ordnung 3 durch drei separate Verbindungen zwischen den Netzgeräten erster Ordnung 1, 1', 1" und dem lokalen Evaluierungs- und Verbindungsrechner dargestellt. Tatsächlich muß es sich dabei nicht um drei separate Verbindungen handeln, vielmehr ist aus dem Stand der Technik auch bekannt, daß es sich bei dem Netzwerk erster Ordnung um eine einzige zusammenhängende Datenverbindung handeln kann, die alle Teilnehmer miteinander verbindet; grundsätzlich kann das Netzwerk erster Ordnung 3 also eine beliebige Netzwerkarchitektur aufweisen.

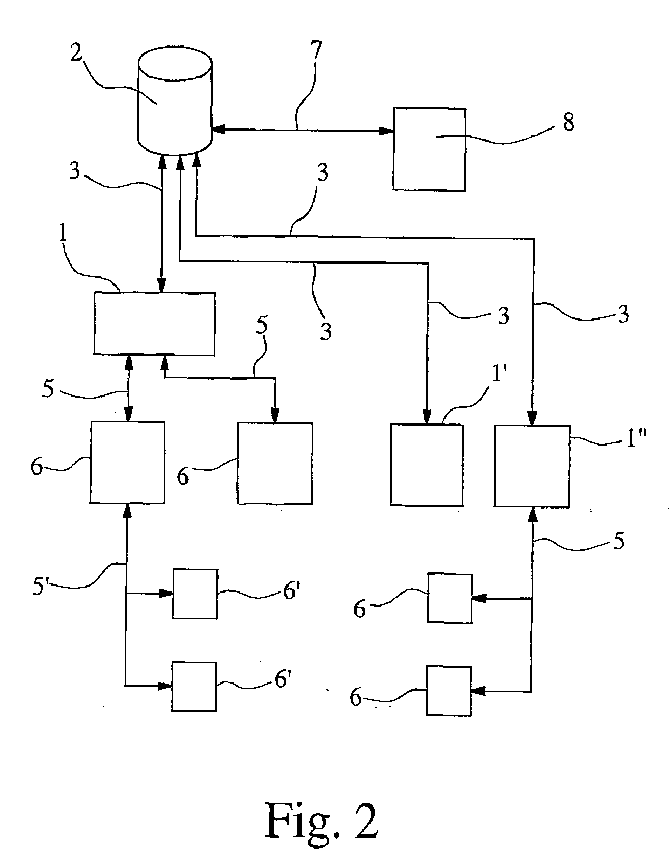

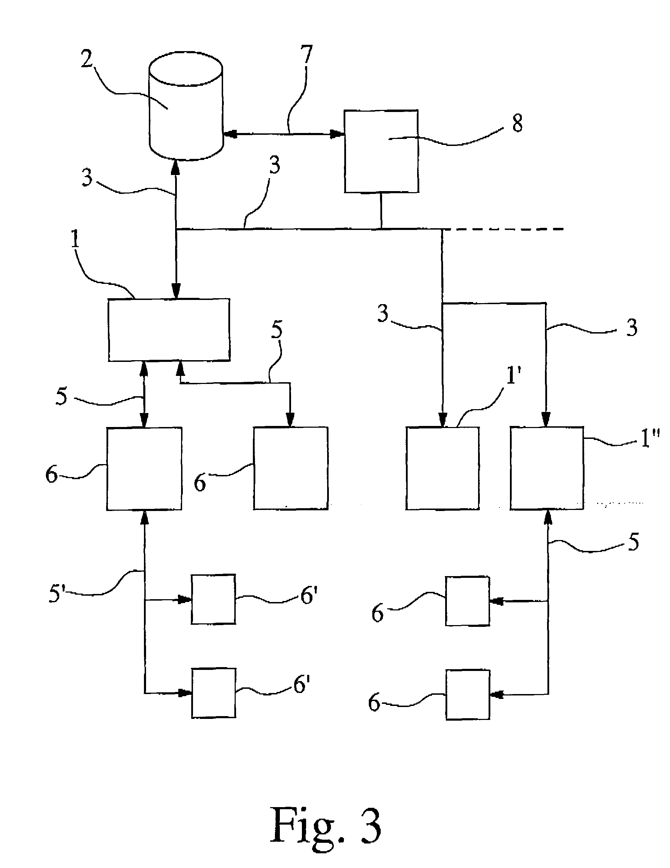

Die in den Fig. 2 und 3 dargestellten Ausführungsbeispiele erfindungsgemä-ßer verteilter Automatisierungssysteme unterscheiden sich von dem in Fig. I dargestellten bekannten verteilten Automatisierungssystem im wesentlichen dadurch, daß die Netzgeräte erster Ordnung 1, 1', 1" und das Datenbanksystem 2 über das Netzwerk erster Ordnung 3 unmittelbar miteinander verbunden sind und daß die Daten von den Netzgeräten erster Ordnung 1, 1', 1" aktiv und direkt über das Netzwerk erster Ordnung 3 an das Datenbanksystem 2 übermittelbar sind. Damit ist die Verwaltung der aus dem Automatisierungssystem stammenden Daten in dem Datenbanksystem 2 unabhängig von dem Vorhandensein eines lokalen Evaluierungs- und Vermittlungsrechners 4, so wie er in Fig. 1 dargestellt ist. Da die von den Netzgeräten erster Ordnung 1, 1', 1" stammenden Daten zudem aktiv an das Datenbanksystem 2 über das Netzwerk erster Ordnung 3 übertragen werden, also ohne daß es einer ständigen Abfrage des Datenbanksystems 2 bedarf, wird das Datenaufkommen auf dem Netzwerk erster Ordnung 3 gegenüber den aus dem Stand der Technik bekannten Lösungen erheblich reduziert.

In den Ausführungsbeispielen gemäß den Fig. 2 und 3 wird mit dem Netzwerk erster Ordnung 3 eine serielle Datenübertragung umgesetzt. Bei dem in Fig. 3 dargestellten Netzwerk erster Ordnung 3 handelt es sich um ein Ethemet-Netzwerk, das mit einem Protokoll betrieben wird, das auf dem TCP/IP-Referenzmodell basiert.

In den dargestellten Ausführungsbeispielen des erfindungsgemäßen Automatisierungssystems sind die Netzgeräte erster Ordnung 1, 1', 1" so ausgestaltet, daß sie ein neues Datum möglichst verzögerungsfrei über das Netzwerk erster Ordnung 3 an das Datenbanksystem 2 übermitteln.

In einem weiteren, hier nicht dargestellten Ausführungsbeispiel, ist wenigstens ein Netzgerät erster Ordnung so ausgestaltet, daß es mehrere neue Daten zunächst speichert, um sie dann blockweise über das Netzwerk erster Ordnung 3 an das Datenbanksystem 2 zu übermitteln, was insbesondere hinsichtlich der Ausnutzung framebasierter Protokolle vorteilhaft ist.

Abgesehen von der Verbindung zwischen den Netzgeräten erster Ordnung 1, 1', 1" und dem Datenbanksystem 2 gilt all das, was zuvor hinsichtlich des aus dem Stand der Technik bekannten Automatisierungssystems gemäß Fig. 1 gesagt worden ist auch für die in den Fig. 2 und 3 dargestellten erfindungsgemä-ßen verteilten Automatisierungssysteme, insbesondere hinsichtlich der Netzgeräte erster Ordnung 1, 1', 1" und deren Verbindung zu Netzgeräten niedrigerer Ordnung 6, 6' über Netzwerke niederer Ordnung 5, 5'. Bei den auf dem Datenbanksystem 2 abgelegten und verwalteten Daten handelt es sich insbesondere um Status- und Diagnosedaten der Netzgeräte erster Ordnung 1, 1', 1" und/oder der Netzgeräte niederer Ordnung 6, 6'.

Bei den in den Fig. 2 und 3 dargestellten Ausführungsbeispielen des erfindungsgemäßen verteilten Automatisierungssystems ist ein Rechner 8, der zur Auswertung der in dem Datenbanksystem 2 abgelegten Daten verwendet wird, über einen separaten Datenkanal 7 mit dem Datenbanksystem 2 verbunden. Im Gegensatz zu dem in Fig. 1 dargestellten Evaluierungs- und Vermittlungsrechner 4 ist der Rechner 8 jedoch nicht zum Betrieb des Datenbanksystems 2 notwendig. Der Rechner 8 dient insbesondere zur Datenevaluierung, Datenvisualisierung und/oder Diagnose des Automatisierungssystems. In Fig. 3 ist gezeigt, daß der Rechner 8 nicht nur über den separaten Datenkanal 7, sondern - zusätzlich - auch über das Netzwerk erster Ordnung 3 mit den Netzgeräten erster Ordnung 1, 1', 1" in Verbindung stehen kann.

## Patentansprüche

1. Verteiltes Automatisierungssystem mit wenigstens einem Netzgerät erster Ordnung (1, 1', 1") und wenigstens einem auf dem Netzgerät erster Ordnung (1, 1', 1") verfügbaren Datum, wenigstens einem Datenbanksystem (2) und wenigstens einem Netzwerk erster Ordnung (3),
**dadurch gekennzeichnet,**
**daß** das Netzgerät erster Ordnung (1, 1', 1") und das Datenbanksystem (2) über das Netzwerk erster Ordnung (3) unmittelbar miteinander verbunden sind, und das Datum von dem Netzgerät erster Ordnung (1, 1', 1") aktiv und direkt über das Netzwerk erster Ordnung (3) an das Datenbanksystem (2) übermittelbar ist.

2. Verteiltes Automatisierungssystem nach Anspruch 1, **dadurch gekennzeichnet, daß** mit dem Netzwerk erster Ordnung (3) eine serielle Datenübertragung umsetzbar ist.

3. Verteiltes Automatisierungssystem nach Anspruch 1 oder 2, **dadurch gekennzeichnet, daß** das Netzwerk erster Ordnung (3) auf einem Ethemet-Standard basiert.

4. Verteiltes Automatisierungssystem nach einem der Ansprüche 1 bis 3, **dadurch gekennzeichnet, daß** die Kommunikation zwischen dem Netzgerät erster Ordnung (1, 1', 1") und dem Datenbanksystem (2) auf dem TCP/IP-Referenzmodell basiert.

5. Verteiltes Automatisierungssystem nach einem der Ansprüche 1 bis 4, **dadurch gekennzeichnet, daß** ein neues Datum auf dem Netzgerät erster Ordnung (1, 1', 1") von dem Netzgerät erster Ordnung (1, 1', 1") möglichst verzögerungsfrei an das Datenbanksystem (2) über das Netzwerk erster Ordnung (3) übermittelbar ist.

6. Verteiltes Automatisierungssystem nach einem der Ansprüche I bis 4, **dadurch gekennzeichnet, daß** neue Daten auf dem Netzgerät erster Ordnung (1, 1', 1") speicherbar und blockweise von dem Netzgerät erster Ordnung (1, 1', 1") über das Netzwerk erster Ordnung (3) an das Datenbanksystem (2) übermittelbar sind.

7. Verteiltes Automatisierungssystem nach einem der Ansprüche I bis 6, **dadurch gekennzeichnet, daß** das Netzgerät erster Ordnung (1, 1', 1") über wenigstens ein Netzwerk niederer Ordnung (5, 5') mit wenigstens einem Netzgerät niederer Ordnung (6, 6') verbindbar ist, wobei das Netzwerk niederer Ordnung (5, 5') insbesondere als Feldbus und das Netzgerät niederer Ordnung (6, 6') als Feldgerät ausgebildet ist.

8. Verteiltes Automatisierungssystem nach einem der Ansprüche 1 bis 7, **dadurch gekennzeichnet, daß** es sich bei den Daten im Netzgerät erster Ordnung (1, 1', 1") um externe Daten und/oder in dem Netzgerät erster Ordnung (1, 1', 1") erzeugte Daten, insbesondere Status- und Diagnosedaten der Netzgeräte erster Ordnung (1, 1', 1") und/oder der Netzgeräte niederer Ordnung (5, 5') handelt.

9. Verteiltes Automatisierungssystem nach einem der Ansprüche 1 bis 8, **dadurch gekennzeichnet, daß** das Datenbanksystem (2) über das Netzwerk erster Ordnung (1, 1', 1") und/oder einen separaten Datenkanal (7) mit einem Rechner (8) verbunden ist, die in dem Datenbanksystem (2) gespeicherten Daten auf den Rechner (8) übermittelbar sind, wobei der Rechner (8) insbesondere zur Datenevaluierung, -visualisierung und Diagnose des Automatisierungssystems einsetzbar ist.

10. Verfahren zur Datenerfassung in einem verteilten Automatisierungssystem, insbesondere nach einem der Ansprüche 1 bis 9, mit wenigstens einem Netzgerät (1, 1', 1"), wenigstens einem auf dem Netzgerät (1, 1', 1") verfügbaren Datum, wenigstens einem Datenbanksystem (2) zur Verwaltung der von dem Netzgerät stammenden Daten und wenigstens einem Netzwerk (3),
**dadurch gekennzeichnet,**
**daß** das Netzgerät (1, 1', 1") und die Datenbank (2) über das Netzwerk (3) unmittelbar miteinander verbunden werden und das Netzgerät (1, 1', 1") die Daten aktiv über das Netzwerk (3) an das Datenbanksystem (2) übermittelt.

11. Verfahren nach Anspruch 10, **dadurch gekennzeichnet, daß** neue Daten auf dem Netzgerät erster Ordnung (1, 1', 1") gespeichert und blockweise von dem Netzgerät erster Ordnung (1, 1', 1") über das Netzwerk erster Ordnung (3) an das Datenbanksystem (2) übermittelt werden.

12. Verfahren nach Anspruch 10 oder 11, mit einem über einen separaten Datenkanal (7) mit dem Datenbanksystem (2) verbundenen Rechner (8), **dadurch gekennzeichnet, daß** in dem Datenbanksystem (2) gespeicherte Daten von dem Datenbanksystem (2) auf den Rechner (8) übermittelt oder durch den Rechner (8) von dem Datenbanksystem (2), insbesondere durch periodisches Polling abgerufen werden.
